# EUROPEAN PATENT APPLICATION

(11) **EP 4 597 644 A1**
(43) Date of publication of application: **06.08.2025**
(21) Application number: 24222305.5
(22) Date of filing: 20.12.2024
(51) Int. Cl.: H01M 4/88, B05C 5/00, B05D 1/00, B05D 7/00, H01M 8/1004

(54) **JOINED BASE MATERIAL, PEELING METHOD, COATING METHOD, PEELING DEVICE, COATING DEVICE, AND BASE MATERIAL CONNECTING METHOD**

(30) Priority: 01.02.2024 JP 2024014150
(71) Applicant: SCREEN Holdings Co., Ltd., Kyoto-shi, Kyoto 602-8585 (JP)
(72) Inventor: MORIKAWA, Soichiro, Kyoto-shi, Kyoto, 602-8585 (JP); TAKAGI, Yoshinori, 602-8585 Kyoto-shi, Kyoto (IN)
(74) Representative: Goddar, Heinz J.

(57) **Abstract**

A joined base material (100) includes a real base material (90), a dummy base material (80), and a connecting member (83). The real base material (90) has an elongated strip shape including a support film (91) and an electrolyte membrane (92) laminated on each other. The dummy base material (80) has an elongated strip shape including a first layer (81) and a second layer (82) laminated on each other. The connecting member (83) connects the real base material (90) and the dummy base material (80) to each other. The connecting member (83) includes a first part (P1), a second part (P2), and a third part (P3). The first part (P1) adheres to the real base material (90). The second part (P2) adheres to the dummy base material (80). The third part (P3) is located between the first part (P1) and the second part (P2) and overlaid on an end portion of the real base material (90) and an end portion of the dummy base material (80). Adhesive power in the third part (P3) is smaller than adhesive power in the first part (P1) and adhesive power in the second part (P2).

## Description

### BACKGROUND OF THE INVENTION

### Field of the Invention

A subject matter disclosed in this specification relates to a joined base material, a peeling method, a coating method, a peeling device, a coating device, and a base material connecting method.

### Description of the Background Art

There is a known apparatus that manufactures a catalyst-coated membrane (CCM) by a roll-to-roll process to be used for fuel cells or for hydrogen production. In the manufacturing apparatus of this type, an electrolyte membrane is unwound from an unwinding roller and the surface of the electrolyte membrane is coated with catalyst ink at a coating unit. Then, the electrolyte membrane after the coating is collected on a take-up roller.

To start manufacture of the CCM in the manufacturing apparatus, a base material is first stretched over a transport path from the unwinding roller to the take-up roller. At this time, stretching the electrolyte membrane itself over the apparatus results in the failure to perform coating on a part of the electrolyte membrane from the coating unit to the take-up roller to cause a loss in the electrolyte membrane. In response, according to Japanese Patent Application Laid-Open No. 2017-068898, a real base material with two laminated layers of a support film and an electrolyte membrane and a dummy base material with two laminated layers of a first layer and a second layer are connected to each other on a layer-by-layer basis to form an elongated strip-shaped joined base material. The resultant joined base material is transported with the dummy base material in the front. The first layer is peeled from the second layer and thereafter the support film is peeled from the electrolyte membrane along a transport path. Next, a catalyst material is applied to the surface of the electrolyte membrane. Transporting the dummy base material ahead of the real base material reduces an area where the electrolyte membrane is unable to be coated successfully in the vicinity of a front-end portion thereof in a transport direction, thereby reducing material loss of the electrolyte membrane.

### SUMMARY OF THE INVENTION

### Technical Problem

According to Japanese Patent Application Laid-Open No. 2017-068898, in connecting the electrolyte membrane with the support film and the dummy base material (two-layer base material) to each other, tapes are affixed to both sides of each of these base materials. In such a connecting process, respective adhesive layers in the tapes on both sides may inadvertently come into contact with each other to cause difficulty in peeling between the tapes. This may cause difficulty in peeling the support film from the electrolyte membrane.

The present invention is intended to provide a technique by which, even in a case where an end portion of a base material containing an electrolyte membrane with a support film is connected to another base material, it is still possible to peel the support film properly from the electrolyte membrane.

### Solution to Problem

To solve the foregoing problem, a first aspect is intended for a joined base material comprising: an elongated strip-shaped first base material including a support film and an electrolyte membrane laminated on each other; an elongated strip-shaped second base material including a first layer and a second layer laminated on each other; and a connecting member connecting the first base material and the second base material to each other. The connecting member includes a first part adhering to the first base material, a second part adhering to the second base material, and a third part located between the first part and the second part and overlaid on an end portion of the first base material and an end portion of the second base material. Adhesive power in the third part is smaller than adhesive power in the first part and adhesive power in the second part.

According to the first aspect, adhesive power is reduced in the third part forming the connecting member and located between the end portion of the first base material and the end portion of the second base material. This allows the support sheet and the electrolyte membrane to be peeled favorably from each other.

According to a second aspect, in the joined base material according to the first aspect, the connecting member includes: a strip-shaped tape base material; a first adhesive layer formed on one surface of the tape base material; and an anti-adhesive film located between the tape base material and the first base material. The anti-adhesive film is located in the third part.

According to the joined base material of the second aspect, the anti-adhesive film can prevent the third part of the connecting member from adhering to the first base material and the second base material directly. This makes it possible to easily reduce adhesive power in the third part of the connecting member.

According to a third aspect, in the joined base material according to the second aspect, the connecting member includes a second adhesive layer formed on one surface of the anti-adhesive film, the second adhesive layer adheres to the end portion of the first base material and the end portion of the second base material, and the second adhesive layer has adhesive power smaller than adhesive power of the first adhesive layer.

According to a fourth aspect, in the joined base material according to the third aspect, the second adhesive layer adheres to a surface of the electrolyte membrane of the first base material, and the second adhesive layer is thinner than the electrolyte membrane.

According to the joined base material of the fourth aspect, it is possible to reduce the occurrence of adhesion of the second adhesive layer to the electrolyte membrane on the back side of the support film.

According to a fifth aspect, in the joined base material according to the third or fourth aspect, the second adhesive layer adheres to a surface of the support film of the first base material, and the second adhesive layer is thinner than the support film.

According to the joined base material of the fifth aspect, it is possible to reduce the occurrence of adhesion of the second adhesive layer to the electrolyte membrane on the back side of the support film.

According to a sixth aspect, in the joined base material according to the second aspect, the connecting member includes a second adhesive layer formed on one surface of the anti-adhesive film, and the second adhesive layer adheres to the first adhesive layer.

According to a seventh aspect, in the joined base material according to the first aspect or the second aspect, the first adhesive layer is formed in the first part and the second part and is absent in the third part.

According to an eighth aspect, in the joined base material according to any one of the first to seventh aspects, the connecting member includes: a first connecting member adhering to a surface of the first base material on one side; and a second connecting member adhering to a surface of the first base material on the other side.

According to a ninth aspect, in the joined base material according to any one of the first to eighth aspects, the connecting member connects the first base material and the second base material to each other while the end portion of the first base material is separated from the end portion of the second base material.

A tenth aspect is intended for a peeling method comprising: a step a) of transporting the joined base material according to the first aspect or the second aspect in a longitudinal direction of the joined base material; and a step b) of peeling the first layer from the second layer in the second base material and thereafter peeling the support film from the electrolyte membrane in the first base material at the joined base material transported by the step a).

An eleventh aspect is intended for a coating method comprising: a step a) of transporting the joined base material according to the first aspect or the second aspect in a longitudinal direction of the joined base material; a step b) of peeling the first layer from the second layer in the second base material and thereafter peeling the support film from the electrolyte membrane in the first base material at the joined base material transported by the step a); and a step c) of applying a catalyst material to a surface of the electrolyte membrane from which the support film has been peeled.

A twelfth aspect is intended for a peeling device comprising: a transport mechanism that transports the joined base material according to the first aspect or the second aspect in a longitudinal direction of the joined base material; and a peeling unit that peels the first layer from the second layer in the second base material and peels the support film from the electrolyte membrane in the first base material.

A thirteenth aspect is intended for a coating device comprising: a transport mechanism that transports the joined base material according to the first aspect or the second aspect in a longitudinal direction of the joined base material; a peeling unit that peels the first layer from the second layer in the second base material and peels the support film from the electrolyte membrane in the first base material; and a coating unit that applies a catalyst material to a surface of the electrolyte membrane from which the support film has been peeled.

A fourteenth aspect is intended for a base material connecting method comprising: a step of connecting an end portion of an elongated strip-shaped first base material and an end portion of an elongated strip-shaped second base material to each other using a connecting member. The first base material includes a support film and an electrolyte membrane laminated on each other. The second base material includes a first layer and a second layer laminated on each other. The connecting member includes a first part adhering to the first base material, a second part adhering to the second base material, and a third part located between the first part and the second part and overlaid on the end portion of the first base material and the end portion of the second base material. Adhesive power in the third part is smaller than adhesive power in the first part and adhesive power in the second part.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows the configuration of a manufacturing apparatus for a catalyst-coated membrane according to one preferred embodiment;
Fig. 2 is an enlarged view of a peeling roller and its vicinity;
Fig. 3 is an enlarged view of a laminating roller and its vicinity;
Fig. 4 is a block diagram showing connection between a controller and each part in the manufacturing apparatus;
Fig. 5 is a partial sectional view of a real base material and a dummy base material connected to each other (joined base material) at a front end portion and its vicinity of the real base material in a transport direction;
Fig. 6 is a partial sectional view of the real base material and the dummy base material (joined base material) at a rear end portion and its vicinity of the real base material in the transport direction;
Fig. 7 is a flowchart showing a flow of transport of the base material in the manufacturing apparatus;
Fig. 8 is a sectional view showing a connecting member according to a first modification;
Fig. 9 is a sectional view showing a connecting member according to a second modification;
Fig. 10 is a sectional view showing a connecting member according to a third modification; and
Fig. 11 shows a joined base material according to a modification.

### DESCRIPTION OF THE PREFERRED EMBODIMENTS

A preferred embodiment of the present invention will be described below by referring to the accompanying drawings. Constituting elements in the preferred embodiment are described merely as examples, and the scope of the present invention is not intended to be limited only to these elements. To facilitate understanding, the size of each part or the number of such parts in the drawings may be illustrated in an exaggerated manner or a simplified manner, as needed.

### <1. Preferred Embodiment>

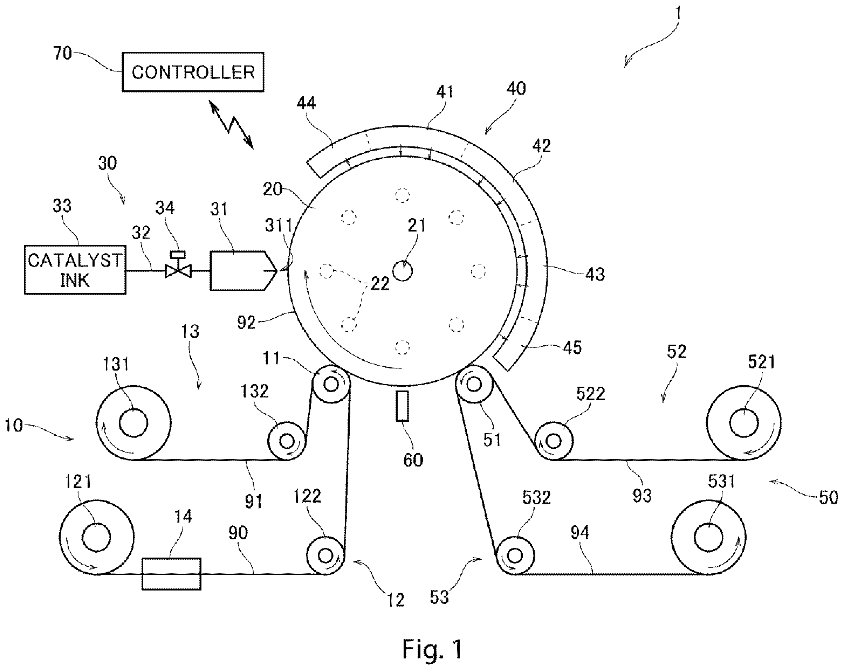

Fig. 1 shows the configuration of a manufacturing apparatus 1 for a catalyst-coated membrane according to one preferred embodiment. The manufacturing apparatus 1 is an apparatus to manufacture a catalyst-coated membrane for polymer electrolyte fuel cells by forming a catalyst layer to become an electrode on a surface of an electrolyte membrane as a strip-shaped membrane. As shown in Fig. 1, the manufacturing apparatus 1 for a catalyst-coated membrane includes an introducing and peeling unit 10, a suction roller 20, a coating unit 30, a drying furnace 40, an affixing unit 50, a surface cooling unit 60, and a controller 70.

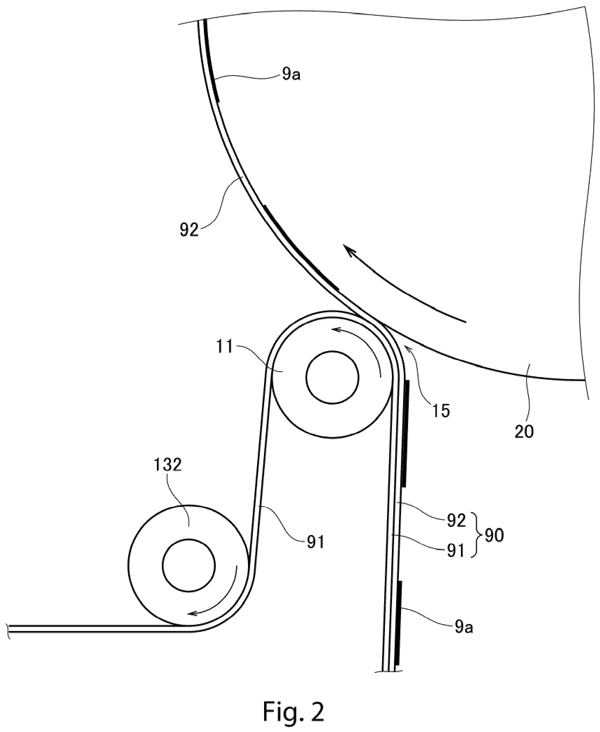

As shown in Fig. 2, the introducing and peeling unit 10 is a unit to introduce an elongated strip-shaped base material 90 composed of two layers of a support film 91 and an electrolyte membrane 92 onto an outer peripheral surface of the suction roller 20 and to peel the support film 91 from the electrolyte membrane 92.

A fluorine-based or hydrocarbon-based polymer electrolyte membrane is used as the electrolyte membrane 92, for example. Specific examples of the electrolyte membrane 92 include polymer electrolyte membranes containing perfluorocarbon sulfonic acid (such as Nafion^{®} available from DuPont USA, Flemion^{®} available from AGC Inc., Aciplex^{®} available from AGC Inc., and Goreselect^{®} available from W. L. Gore & Associates, Inc.). The electrolyte membrane 92 has a thickness from 5 to 30 µm, for example. The electrolyte membrane 92 swells when exposed to moisture in the atmosphere, and shrinks with reduction in humidity in the atmosphere. That is, the electrolyte membrane 92 has the property of being easily deformable in response to humidity in the atmosphere.

The support film 91 is a film for suppressing deformation of the electrolyte membrane 92. Resin having higher mechanical strength than the electrolyte membrane 92 and having an excellent shape retaining function is used as a material for the support film 91. Specific examples of the support film 91 include films made of polyethylene naphthalate (PEN) or polyethylene terephthalate (PET). The support film 91 has a thickness from 25 to 100 µm, for example. In the following description, a direction in which the electrolyte membrane 92 is laminated on the support film 91 will simply be called a "thickness direction."

As shown in Fig. 1, the introducing and peeling unit 10 includes a peeling roller 11, an introducing part 12, a discharging part 13, and a connecting part 14.

The peeling roller 11 is a roller to rotate about an axis extending horizontally. The peeling roller 11 has an outer peripheral surface of a circular cylindrical shape formed of an elastic body. The outer peripheral surface of the peeling roller 11 and an outer peripheral surface of the suction roller 20 described later face each other with a gap therebetween for causing the base material 90 to pass through. The peeling roller 11 is pressurized toward the suction roller 20 by an air cylinder not shown in the drawings.

The introducing part 12 includes a base material unwinding roller 121 and a first detecting roller 122. The base material unwinding roller 121 and the first detecting roller 122 are both arranged parallel to the peeling roller 11. The base material 90 is wound on the base material unwinding roller 121 before being supplied. The base material unwinding roller 121 is caused to rotate by power from a motor not shown in the drawings. When the base material unwinding roller 121 rotates, the base material 90 is unwound from the base material unwinding roller 121.

The base material 90 unwound from the base material unwinding roller 121 comes into contact with an outer peripheral surface of the first detecting roller 122 to be changed in direction, and is transported toward the peeling roller 11. The first detecting roller 122 measures a load received from the base material 90 using a load cell to detect tension applied on the base material 90 at the introducing part 12. The controller 70 described later controls the number of rotations of the base material unwinding roller 121 in such a manner that the tension on the base material 90 detected by the first detecting roller 122 becomes equal to a preset value.

Fig. 2 is an enlarged view of the peeling roller 11 and its vicinity. As shown in Fig. 2, the base material 90 having passed through the first detecting roller 122 is introduced into a gap 15 between the peeling roller 11 and the suction roller 20. At this time, the support film 91 comes into contact with the outer peripheral surface of the peeling roller 11 and the electrolyte membrane 92 comes into contact with the outer peripheral surface of the suction roller 20. The base material 90 is pressed against the outer peripheral surface of the suction roller 20 by a pressure received from the peeling roller 11. Then, the electrolyte membrane 92 is sucked on the outer peripheral surface of the suction roller 20 by a negative pressure at the suction roller 20 described later.

A layer of a catalyst material 9a is formed in advance on one of surfaces of the electrolyte membrane 92 unwound from the base material unwinding roller 121. Thus, the electrolyte membrane 92 is sucked on the outer peripheral surface of the suction roller 20 together with the layer of the catalyst material 9a. A coating device different from the manufacturing apparatus 1 forms the layer of the catalyst material 9a by applying catalyst ink intermittently to the surface of the electrolyte membrane 92 and then drying the applied catalyst ink while transporting the base material 90 composed of two layers of the support film 91 and the electrolyte membrane 92 as it is by a roll-to-roll process.

The discharging part 13 includes a film take-up roller 131 and a second detecting roller 132. The film take-up roller 131 and the second detecting roller 132 are both arranged parallel to the peeling roller 11 The support film 91 having passed through the gap 15 moves away from the suction roller 20 and is transported in a direction of the second detecting roller 132. By doing so, the support film 91 is peeled from the electrolyte membrane 92. Specifically, in this preferred embodiment, the peeling roller 11, the suction roller 20, and the discharging part 13 form a peeling unit that peels the support film 91 from the electrolyte membrane 92. The peeled support film 91 comes into contact with an outer peripheral surface of the second detecting roller 132 to be changed in direction, and is transported toward the film take-up roller 131.

The film take-up roller 131 is caused to rotate by power from a motor not shown in the drawings. By doing so, the support film 91 is wound on the film take-up roller 131. The second detecting roller 132 measures a load received from the support film 91 using a load cell to detect tension applied to the support film 91 at the discharging part 13. The controller 70 described later controls the number of rotations of the film take-up roller 131 in such a manner that the tension on the support film 91 detected by the second detecting roller 132 becomes equal to a preset value.

The connecting part 14 is located between the base material unwinding roller 121 and the first detecting roller 122. The connecting part 14 has a mechanism for cutting the base material (real base material described later) 90 or a dummy base material 80 described later, and a mechanism for connecting a new base material 90 or a new dummy base material 80 to the cut base material 90 or to the cut dummy base material 80.

The suction roller 20 is a roller to rotate while holding the electrolyte membrane 92 on the outer peripheral surface thereof under suction. The suction roller 20 has the outer peripheral surface of a circular cylindrical shape having a larger diameter than the peeling roller 11. The diameter of the suction roller 20 is from 400 to 1600 mm, for example. The suction roller 20 is caused to rotate about an axis extending horizontally (namely, parallel to the peeling roller 11) by power from a motor not shown in the drawings. A first direction as a rotation direction of the suction roller 20 and a second direction as a rotation direction of the peeling roller 11 are opposite to each other.

A porous material such as porous carbon or porous ceramics is used as a material for the suction roller 20, for example. Specific examples of the porous ceramics include sintered bodies of alumina (Al₂O₃) or silicon carbide (SiC). The porous suction roller 20 has a pore diameter of equal to or less than 5 µm, for example, and a porosity from 15 to 50%, for example. The outer peripheral surface of the suction roller 20 is formed into surface roughness of equal to or less than 5 µm in terms of a value of Rz (maximum height). A total runout of the suction roller 20 during its rotation (fluctuations in a distance from the rotary axis to the outer peripheral surface) is equal to or less than 10 µm.

The suction roller 20 has an end surface provided with a suction opening 21. The suction opening 21 is connected to a sucking mechanism (for example, an exhaust pump) beyond the drawing. When the sucking mechanism is put into operation, a negative pressure is developed at the suction opening 21 of the suction roller 20. A negative pressure is further developed at the outer peripheral surface of the suction roller 20 through the pores in the suction roller 20. By developing a negative pressure of equal to or greater than 90 kPa at the suction opening 21, for example, a negative pressure of equal to or greater than 10 kPa is developed at the outer peripheral surface of the suction roller 20. With this negative pressure, the electrolyte membrane 92 is held under suction on the outer peripheral surface of the suction roller 20 and at the same time, is transported in an arc-like pattern by the rotation of the suction roller 20.

As shown by dashes in Fig. 1, a plurality of water-cooled tubes 22 is provided inside the suction roller 20. The water-cooled tubes 22 receive cooling water adjusted at a predetermined temperature from a water supplying mechanism beyond the drawing. When the manufacturing apparatus 1 is in operation, heat from the suction roller 20 is absorbed by the cooling water as a heat medium. By doing so, the suction roller 20 is cooled. The cooling water with the absorbed heat is discharged to a drainage mechanism beyond the drawing.

The coating unit 30 is a mechanism for applying catalyst ink to a surface of the electrolyte membrane 92 being transported by the suction roller 20. The catalyst ink used herein is electrode paste prepared by dispersing particles containing a catalyst material (platinum (Pt), for example) in a solvent such as alcohol. As shown in Fig. 1, the coating unit 30 has a coating nozzle 31. The coating nozzle 31 is provided downstream from the peeling roller 11 in a direction in which the electrolyte membrane 92 is transported by the suction roller 20. The coating nozzle 31 has an ejection opening 311 facing the outer peripheral surface of the suction roller 20. The ejection opening 311 is a slit-like opening extending horizontally along the outer peripheral surface of the suction roller 20.

The coating nozzle 31 is connected through a flow path to a catalyst ink source 33 across a supply pipe 32. An on-off valve 34 is interposed in the path along the supply pipe 32. Thus, opening the on-off valve 34 supplies the catalyst ink from the catalyst ink source 33 to the coating nozzle 31 via the supply pipe 32. Then, the catalyst ink is supplied from the ejection opening 311 of the coating nozzle 31 toward the electrolyte membrane 92. As a result, the catalyst ink is applied to an external surface of the electrolyte membrane 92 held on the suction roller 20.

In this preferred embodiment, opening and closing the on-off valve 34 in a constant cycle ejects the catalyst ink intermittently from the ejection opening 311 of the coating nozzle 31. By doing so, the catalyst ink is applied to the surface of the electrolyte membrane 92 at regular intervals in the transport direction. In another case, the on-off valve 34 may be opened continuously to apply the catalyst ink to the surface of the electrolyte membrane 92 seamlessly in the transport direction.

The catalyst material in the catalyst ink used herein is a material to generate fuel cell reaction at an anode or a cathode of a polymer fuel cell. More specifically, platinum (Pt), a platinum alloy, a platinum compound and others may be used as the catalyst material. Examples of the platinum alloy include alloys of platinum and at least one type of metal selected from the group consisting of ruthenium (Ru), palladium (Pd), nickel (Ni), molybdenum (Mo), iridium (Ir), iron (Fe), and others. In general, platinum is used as the catalyst material for the cathode, and a platinum alloy is used as the catalyst material for the anode. The catalyst ink ejected from the coating nozzle 31 may either be for the cathode or for the anode. Meanwhile, the catalyst material 9a and a catalyst material 9b formed on the front and the back of the electrolyte membrane 92 are catalyst materials having polarities opposite to each other.

The drying furnace 40 is a unit to dry the catalyst ink applied to the surface of the electrolyte membrane 92. The drying furnace 40 of this preferred embodiment is arranged downstream from the coating unit 30 in the direction in which the electrolyte membrane 92 is transported by the suction roller 20. The drying furnace 40 is provided in an arc-like pattern along the outer peripheral surface of the suction roller 20. As shown in Fig. 1, the drying furnace 40 includes three hot air suppliers 41 to 43, and two thermal interrupters 44 and 45. The three hot air suppliers 41 to 43 blow heated gases (hot airs) toward the outer peripheral surface of the suction roller 20. When the electrolyte membrane 92 coated with the catalyst ink passes through the hot air suppliers 41 to 43, the catalyst ink is dried with the hot airs to be solidified. Specifically, the solvent in the catalyst ink evaporates to form a layer of the catalyst material 9b on the surface of the electrolyte membrane 92.

The three hot air suppliers 41 to 43 blow the hot airs at temperatures different from each other. The temperatures of the hot airs blown from the three hot air suppliers 41 to 43 increase sequentially from an upstream side toward a downstream side in the direction in which the electrolyte membrane 92 is transported by the suction roller 20. The temperature of the hot air blown from the hot air supplier 41 on the most upstream side in the transport direction is set equal to or greater than a surrounding environmental temperature and equal to or less than 40°C, for example. The temperature of the hot air blown from the second hot air supplier 42 is set equal to or greater than 40°C and equal to or less than 80°C, for example. The temperature of the hot air blown from the hot air supplier 43 on the most downstream side in the transport direction is set equal to or greater than 50°C and equal to or less than 100°C, for example.

As described above, at the drying furnace 40 of this preferred embodiment, the temperatures of the hot airs blown to the electrolyte membrane 92 are increased sequentially toward the downstream side in the transport direction. This allows the temperatures of the electrolyte membrane 92 and the catalyst ink to be increased gently. By doing so, it becomes possible to reduce the occurrence of damage due to sudden drying such as a crack in the catalyst material 9b.

The two thermal interrupters 44 and 45 are provided upstream and downstream respectively from the three hot air suppliers 41 and 43 in the direction in which the electrolyte membrane 92 is transported by the suction roller 20. Specifically, the one thermal interrupter 44 is arranged upstream in the transport direction from the hot air supplier 41 on the most upstream side in the transport direction, and the other thermal interrupter 45 is arranged downstream in the transport direction from the hot air supplier 43 on the most downstream side in the transport direction. The thermal interrupters 44 and 45 suck gas in the vicinity of the outer peripheral surface of the suction roller 20. This prevents the hot airs blown from the hot air suppliers 41 to 43 from leaking upstream and downstream in the transport direction across the thermal interrupters 44 and 45. This further prevents vapor of the solvent generated from the catalyst ink during the drying from leaking upstream and downstream in the transport direction across the thermal interrupters 44 and 45.

The affixing unit 50 is a unit to affix a strip-shaped cover film 93 to the surface of the electrolyte membrane 92 on which the layer of the catalyst material 9b is formed. The affixing unit 50 is arranged downstream from the drying furnace 40 in the direction in which the electrolyte membrane 92 is transported by the suction roller 20. As shown in Fig. 1, the affixing unit 50 includes a laminating roller 51, a film supplier 52, and an assembly collector 53.

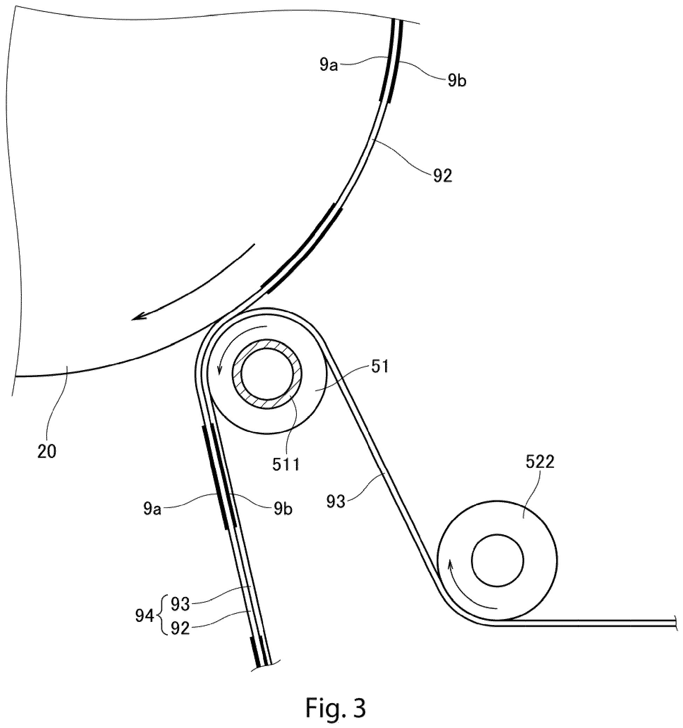

Fig. 3 is an enlarged view of the laminating roller 51 and its vicinity. The laminating roller 51 is a roller to rotate about an axis extending horizontally. The laminating roller 51 has an outer peripheral surface of a circular cylindrical shape having a smaller diameter than the suction roller 20. The outer peripheral surface of the laminating roller 51 and the outer peripheral surface of the suction roller 20 face each other with a gap therebetween for causing the electrolyte membrane 92 and the cover film 93 to pass through. The laminating roller 51 is pressurized toward the suction roller 20 by an air cylinder not shown in the drawings.

A material used for the laminating roller 51 is metal having high heat conductivity, for example. A heater 511 to generate heat by being electrically energized is provided inside the laminating roller 51. A sheathed heater may be used as the heater 511, for example. When the heater 511 is electrically energized, the outer peripheral surface of the laminating roller 51 is temperature-adjusted at a predetermined temperature higher than an environmental temperature by the heat generated from the heater 511. The temperature of the outer peripheral surface of the laminating roller 51 may be measured using a temperature sensor such as a radiation thermometer, and an output from the heater 511 may be controlled on the basis of result of the measurement so as to place the outer peripheral surface of the laminating roller 51 at a constant temperature.

Referring back to Fig. 1, the film supplier 52 includes a film unwinding roller 521 and a third detecting roller 522. The film unwinding roller 521 and the third detecting roller 522 are both arranged parallel to the laminating roller 51. The cover film 93 is wound on the film unwinding roller 521 before being supplied. The film unwinding roller 521 is caused to rotate by power from a motor not shown in the drawings. When the film unwinding roller 521 rotates, the cover film 93 is unwound from the film unwinding roller 521.

Resin having higher mechanical strength than the electrolyte membrane 92 and having an excellent shape retaining function is used as a material for the cover film 93. The cover film 93 is a film made of polyethylene naphthalate (PEN) or polyethylene terephthalate (PET), for example. The cover film 93 may be the same film as the support film 91. The support film 91 wound on the film take-up roller 131 may be unwound as the cover film 93 from the film unwinding roller 521.

The unwound cover film 93 comes into contact with an outer peripheral surface of the third detecting roller 522 to be changed in direction, and is transported toward the laminating roller 51. The third detecting roller 522 measures a load received from the cover film 93 using a load cell to detect tension applied to the cover film 93 at the film supplier 52. The controller 70 described later controls the number of rotations of the film unwinding roller 521 in such a manner that the tension on the cover film 93 detected by the third detecting roller 522 becomes equal to a preset value.

The cover film 93 having passed through the third detecting roller 522 is introduced into between the electrolyte membrane 92 held under suction on the outer peripheral surface of the suction roller 20, and the laminating roller 51. At this time, the cover film 93 is pressed against the electrolyte membrane 92 by a pressure from the laminating roller 51 and is heated by heat from the laminating roller 51. As a result, the cover film 93 is affixed to the external surface of the electrolyte membrane 92. The catalyst material 9b formed on the surface of the electrolyte membrane 92 is sandwiched between the electrolyte membrane 92 and the cover film 93. This results in formation of a catalyst-coated membrane 94 composed of the electrolyte membrane 92, the catalyst materials 9a and 9b, and the cover film 93.

The assembly collector 53 includes an assembly take-up roller 531 and a fourth detecting roller 532. The assembly take-up roller 531 and the fourth detecting roller 532 are both arranged parallel to the laminating roller 51. The catalyst-coated membrane 94 having passed through between the suction roller 20 and the laminating roller 51 moves away from the suction roller 20 and is transported in a direction of the fourth detecting roller 532. Then, the catalyst-coated membrane 94 comes into contact with an outer peripheral surface of the fourth detecting roller 532 to be changed in direction, and is transported toward the assembly take-up roller 531.

The assembly take-up roller 531 is caused to rotate by power from a motor not shown in the drawings. By doing so, the catalyst-coated membrane 94 is wound on the assembly take-up roller 531. The fourth detecting roller 532 measures a load received from the catalyst-coated membrane 94 using a load cell to detect tension applied to the catalyst-coated membrane 94 at the assembly collector 53. The controller 70 described later controls the number of rotations of the assembly take-up roller 531 in such a manner that the tension on the catalyst-coated membrane 94 detected by the fourth detecting roller 532 becomes equal to a preset value.

The surface cooling unit 60 is a mechanism for cooling the outer peripheral surface of the suction roller 20. The surface cooling unit 60 is arranged at a position facing a region of the outer peripheral surface of the suction roller 20 ranging between the affixing unit 50 and the introducing and peeling unit 10 and not used for holding the electrolyte membrane 92. The surface cooling unit 60 blows clean dry air at a temperature (5°C, for example) lower than an environmental temperature to the outer peripheral surface of the suction roller 20, for example. The suction roller 20 heated by the drying furnace 40 and the laminating roller 51 receives the clean dry air to be cooled.

As described above, the manufacturing apparatus 1 of this preferred embodiment performs each of steps sequentially including unwinding of the base material 90 from the base material unwinding roller 121, peeling of the support film 91 from the electrolyte membrane 92, application of the catalyst ink to the electrolyte membrane 92, drying using the drying furnace 40, and affixing of the cover film 93 to the electrolyte membrane 92. As a result, the catalyst-coated membrane 94 used as an electrode of a polymer electrolyte fuel cell is manufactured. The electrolyte membrane 92 is always held by the support film 91, the suction roller 20, or the cover film 93. This suppresses deformation of the electrolyte membrane 92 such as swelling or shrinkage in the manufacturing apparatus 1, for example.

In this preferred embodiment, each of the rollers including the base material unwinding roller 121 as an unwinding part, the first detecting roller 122, the peeling roller 11, the second detecting roller 132, the film take-up roller 131, the suction roller 20, the laminating roller 51, the fourth detecting roller 532, and the assembly take-up roller 531 as a take-up part form a transport mechanism that transports the base material 90 in a longitudinal direction.

The transport mechanism and the introducing and peeling unit 10 are exemplary structures of a peeling device that peels the support film 91 from the electrolyte membrane 92. The transport mechanism, the introducing and peeling unit 10, and the coating unit 30 are exemplary structures of a coating device that applies the catalyst material to the electrolyte membrane 92 from which the support film 91 has been peeled.

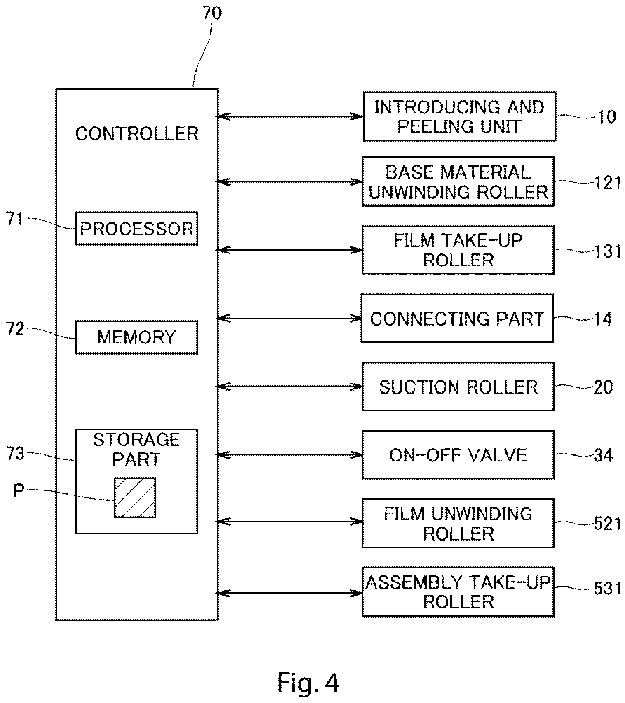

Fig. 4 is a block diagram showing connection between the controller 70 and each part in the manufacturing apparatus 1. The controller 70 is a device to control the motion of each part in the manufacturing apparatus 1. As shown in Fig. 4, the controller 70 is configured using a computer with a processor 71 including a CPU, a memory 72 such as a RAM, and a storage part 73 such as a hard disk drive. The storage part 73 stores a computer program P installed therein for implementation of a printing process.

As shown in Fig. 4, the controller 70 is communicably connected to each of the motor for the base material unwinding roller 121, the motor for the film take-up roller 131, the connecting part 14, the motor for the suction roller 20, the sucking mechanism for the suction roller 20, the water supplying mechanism for the suction roller 20, the on-off valve 34 of the coating unit 30, the motor for the film unwinding roller 521, and the motor for the assembly take-up roller 531. While not shown in the drawings, the controller 70 is communicably connected to each of the load cell for the first detecting roller 122, the load cell for the second detecting roller 132, the three hot air suppliers 41 to 43, the two thermal interrupters 44 and 45, the heater 511, the load cell for the third detecting roller 522, the load cell for the fourth detecting roller 532, and the surface cooling unit 60.

The controller 70 reads the computer program P and data from the storage part 73 into the memory 72 temporarily. The processor 71 performs arithmetic processing on the basis of the read computer program P, thereby controlling the motion of each of the parts described above. By doing so, a process of manufacturing a catalyst-coated membrane proceeds in the manufacturing apparatus 1.

### <2. Transport of Base Material in Manufacturing Apparatus>

What is described next is how the base material is transported in manufacturing a catalyst-coated membrane in the above-described manufacturing apparatus 1.

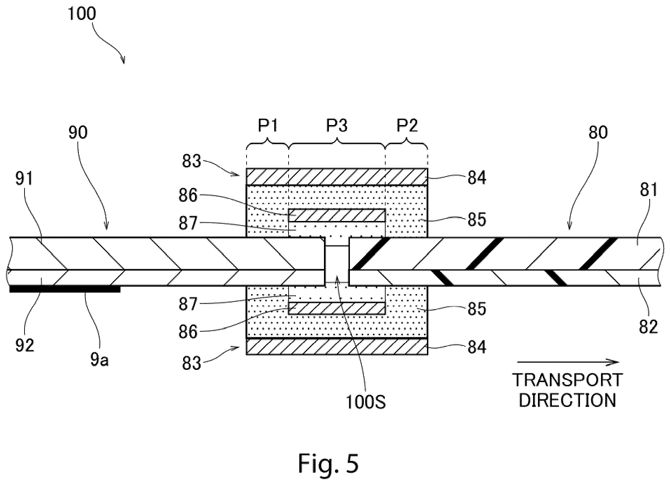

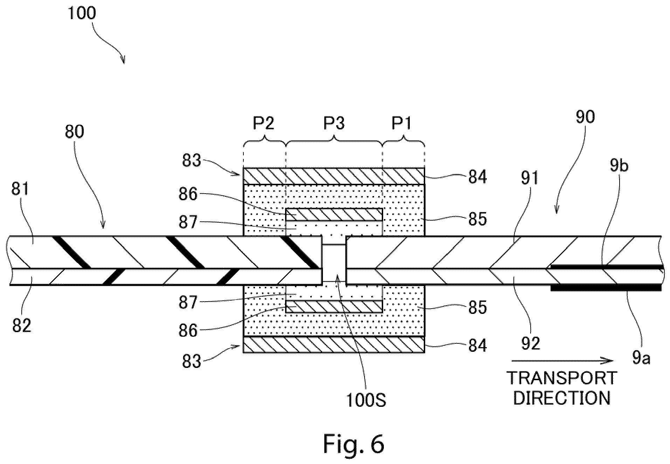

The transport mechanism of the manufacturing apparatus 1 transports the elongated strip-shaped base material 90 (hereinafter called a "real base material 90") composed of two layers of the support film 91 and the electrolyte membrane 92 with the dummy base materials 80 connected to the front and the back of the real base material 90. Fig. 5 is a partial sectional view of the real base material 90 and the dummy base material 80 connected to each other (joined base material 100) at a front end portion and its vicinity of the real base material 90 in the transport direction. Fig. 6 is a partial sectional view of the real base material 90 and the dummy base material 80 (joined base material 100) at a rear end portion and its vicinity of the real base material 90 in the transport direction. As shown in Figs. 5 and 6, the dummy base material 80 is an elongated strip-shaped base material with laminated layers (in this preferred embodiment, two layers of a first layer 81 and a second layer 82) of the same number as the real base material 90.

The first layer 81 of the dummy base material 80 has a thickness that is preferably substantially equal to the thickness of the support film 91 of the real base material 90. The second layer 82 of the dummy base material 80 has a thickness that is preferably substantially equal to the thickness of the electrolyte membrane 92 of the real base material 90. The thickness of the second layer 82 is preferably smaller than that of the first layer 81. Films of resin such as polyethylene naphthalate (PEN) may be used as the first layer 81 and the second layer 82, for example. A surface of the second layer 82 contacting the first layer 81 has an adhesive material. With this adhesive material, the first layer 81 and the second layer 82 are bonded to each other in a manner allowing peeling therebetween. The adhesive power of the adhesive material is preferably comparable to the power of bonding between the support film 91 and the electrolyte membrane 92 of the real base material 90.

As shown in Figs. 5 and 6, the real base material 90 and the dummy base material 80 are connected to each other by connecting members 83, 83 in a pair. One of the connecting members 83 in a pair forms connection between the support film 91 of the real base material 90 and the first layer 81 of the dummy base material 80. This one of the connecting members 83 in a pair is a member forming connection between an end portion of the real base material 90 (first base material) and an end portion of the dummy base material 80 (second base material). The connecting member 83 has a strip shape extending in a width direction perpendicular to the transport direction. Preferably, the connecting member 83 has heat resistance (resistance to heat equal to or higher than 80°C, for example).

The connecting member 83 includes a first part P1, a second part P2, and a third part P3. The first part P1 is a part adhering to the support film 91 of the real base material 90. The second part P2 is a part adhering to the first layer 81 of the dummy base material 80. The third part P3 is a part overlaid in the thickness direction on both an end portion of the support film 91 in the longitudinal direction and an end portion of the first layer 81 in the longitudinal direction. In the illustration in Fig. 5, the third part P3 of the connecting member 83 is overlaid in the thickness direction on a gap 100S between the dummy base material 80 and the real base material 90.

As shown in Fig. 5, the connecting member 83 includes a tape base material 84 and a first adhesive layer 85. The tape base material 84 is a plastic film, for example, and is preferably a film having heat resistance such as a polyimide film. The first adhesive layer 85 is composed of an adhesive material such as a heat-resistant silicone-based adhesive material, for example. The first adhesive layer 85 is a layer of the adhesive material applied to the tape base material 84. As shown in Fig. 5, the first part P1 and the second part P2 of the connecting member 83 adhere to the real base material 90 and the dummy base material 80 respectively via the first adhesive layer 85.

The connecting member 83 further includes an anti-adhesive film 86. The anti-adhesive film 86 is a member for preventing the first adhesive layer 85 of the connecting member 83 from adhering to the real base material 90 and the dummy base material 80 directly. The anti-adhesive film 86 is arranged between the tape base material 84 and the real base material 90 and between the tape base material 84 and the dummy base material 80 in the thickness direction. The anti-adhesive film 86 is overlaid in the thickness direction on the third part P3 of the connecting member 83. The anti-adhesive film 86 is overlaid in the thickness direction on the end portion of the dummy base material 80, the end portion of the real base material 90, and the gap 100S between the dummy base material 80 and the real base material 90. The anti-adhesive film 86 has a strip shape extending in the width direction. The anti-adhesive film 86 is a plastic film, for example, and is preferably a film having heat resistance such as a polyimide film.

The connecting member 83 further includes a second adhesive layer 87. The second adhesive layer 87 is formed on one surface of the anti-adhesive film 86. The second adhesive layer 87 is a layer of an adhesive material such as a heat-resistant silicone-based adhesive material, for example. The second adhesive layer 87 is formed by applying the adhesive material to the surface of the anti-adhesive film 86. The second adhesive layer 87 adheres to the end portion of the dummy base material 80 and the end portion of the real base material 90. The adhesive power of the second adhesive layer 87 is smaller than the adhesive power of the first adhesive layer 85. This makes adhesive power in the third part P3 (the adhesive power of the second adhesive layer 87) smaller than adhesive power in the first part P1 and adhesive power in the second part P2 (corresponding to the adhesive power of the first adhesive layer 85). In the description of the present application, "adhesive power" means power of adhering to the support film 91 or the electrolyte membrane 92 unless specified otherwise. The adhesive power is measured by a 180° peeling test conforming ISO29862: 2007.

Using the connecting member 83 makes it possible to weaken joining between the first layer 81 and the electrolyte membrane 92 and joining between the second layer 82 and the support film 91, compared to using an adhesive tape without the anti-adhesive film 86 and composed only of the tape base material 84 and the first adhesive layer 85. Thus, in peeling the first layer 81 from the second layer 82 and thereafter peeling the support film 91 from the electrolyte membrane 92 at the introducing and peeling unit 10, it is possible to avoid a situation where the electrolyte membrane 92 is dragged by the first layer 81 to disable peeling of the support film 91 from the electrolyte membrane 92.

If the real base material 90 and the dummy base material 80 are connected to each other on both sides using the respective connecting members 83 and if one of the connecting members 83 adheres to the other connecting member 83 in the gap 100S, for example, this adhesion occurs via the second adhesive layer 87 having comparatively small adhesive power. In this case, the connecting members 83 are peeled from each other easily compared to a case where the adhesion occurs via the first adhesive layer 85 having comparatively large adhesive power. Thus, it is possible to peel the support film 91 properly from the electrolyte membrane 92.

The adhesive power of the second adhesive layer 87 preferably has a smaller value than peeling power of the introducing and peeling unit 10 (1 N/cm, for example). The adhesive power of the second adhesive layer 87 is preferably equal to or less than 0.2 N/cm, more preferably, equal to or less than 0.1 N/cm. Even if the second adhesive layers 87 on the both sides adhere to each other, making the adhesive power of the second adhesive layer 87 smaller than the peeling power allows the second adhesive layers 87 to be peeled from each other favorably.

The second adhesive layer 87 has a thickness that is preferably smaller than that of a member to which the connecting member 83 is affixed (the support film 91 or the electrolyte membrane 92 of the real base material 90, or the first layer 81 or the second layer 82 of the dummy base material 80, for example). More specifically, the thickness of the second adhesive layer 87 is equal to or less than 20 µm, more preferably, equal to or less than 10 µm. Fulfilling this condition makes it possible to reduce the occurrence of adhesion of the second adhesive layer 87 on one side to the second adhesive layer 87 on the other side. Thus, it is possible to peel the support film 91 favorably from the electrolyte membrane 92 after peeling of the first layer 81 from the second layer 82.

If the second adhesive layer 87 of the connecting member 83 on the side of the support film 91 (namely, the second adhesive layer 87 adhering to a surface of the support film 91) is thinner than the support film 91, this second adhesive layer 87 can become unlikely to adhere to the electrolyte membrane 92 on the other side. Furthermore, if the second adhesive layer 87 of the connecting member 83 on the side of the electrolyte membrane 92 (namely, the second adhesive layer 87 adhering to a surface of the electrolyte membrane 92) is thinner than the electrolyte membrane 92, this second adhesive layer 87 can become unlikely to adhere to the support film 91 on the other side. As a result, it is possible to peel the support film 91 favorably from the electrolyte membrane 92.

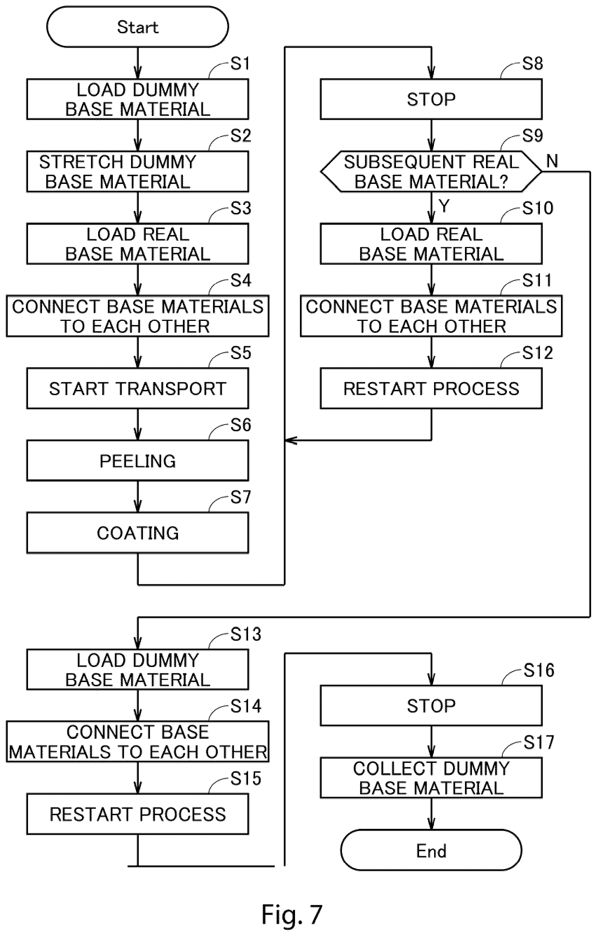

Fig. 7 is a flowchart showing a flow of transport of the base material in the manufacturing apparatus 1. To start manufacture of a catalyst-coated membrane in the manufacturing apparatus 1, the dummy base material 80 in a roll shape is first loaded on the base material unwinding roller 121 (step S1). Then, the dummy base material 80 is unwound from the base material unwinding roller 121 and the unwound part of the dummy base material 80 is stretched over the transport path in the manufacturing apparatus 1 (step S2).

The first layer 81 of the dummy base material 80 is stretched over a transport path along which the support film 91 is to pass. Specifically, the first layer 81 coming from the gap between the peeling roller 11 and the suction roller 20 passes through the second detecting roller 132, and is then wound on the film take-up roller 131. The second layer 82 of the dummy base material 80 is stretched over a transport path along which the electrolyte membrane 92 is to pass. Specifically, the second layer 82 coming from the gap between the peeling roller 11 and the suction roller 20 passes through the suction roller 20, the laminating roller 51, and the fourth detecting roller 532, and is then wound on the assembly take-up roller 531.

The dummy base material 80 has a length in the longitudinal direction that is preferably greater than that of the transport path from the base material unwinding roller 121 to the film take-up roller 131 or that of the transport path from the base material unwinding roller 121 to the assembly take-up roller 531, whichever is greater. This allows the dummy base material 80 to be stretched over the transport path entirely in the manufacturing apparatus 1 before transport of the real base material 90.

After the dummy base material 80 is stretched over the manufacturing apparatus 1 entirely, the dummy base material 80 is cut at the connecting part 14. The dummy base material 80 may be cut automatically by a mechanism to operate in response to a command from the controller 70 or manually by a user of the manufacturing apparatus 1. When the cutting of the dummy base material 80 is finished, the dummy base material 80 in a roll shape left on the base material unwinding roller 121 is removed from the base material unwinding roller 121. Next, the real base material 90 in a roll shape is loaded on the base material unwinding roller 121 (step S3). Then, the real base material 90 is unwound from the base material unwinding roller 121, and a front end portion of the real base material 90 in the transport direction and a rear end portion of the dummy base material 80 in the transport direction are connected to each other at the connecting part 14 (step S4).

In step S4, the real base material 90 and the dummy base material 80 are connected to each other on a layer-by-layer basis. Specifically, the support film 91 of the real base material 90 and the first layer 81 of the dummy base material 80 are connected to each other, and the electrolyte membrane 92 of the real base material 90 and the second layer 82 of the dummy base material 80 are connected to each other. These base materials are connected to each other by affixing the connecting member 83 in such a manner that the connecting member 83 spans both of these base materials like in Fig. 5, for example. This results in the formation of the elongated strip-shaped joined base material 100 with the support film 91 and the first layer 81 continuous with each other in the longitudinal direction and with the electrolyte membrane 92 and the second layer 82 continuous with each other in the longitudinal direction.

The real base material 90 and the dummy base material 80 may be connected to each other automatically by a mechanism to operate in response to a command from the controller 70 or manually by the user of the manufacturing apparatus 1.

As shown in Fig. 5, for connecting the real base material 90 and the dummy base material 80 to each other using the connecting member 83 at the connecting part 14, the anti-adhesive film 86 provided with the second adhesive layer 87 may be first affixed to the real base material 90 and the dummy base material 80. Then, the tape base material 84 provided with the first adhesive layer 85 may be affixed to both the dummy base material 80 and the real base material 90 across the anti-adhesive film 86. As the anti-adhesive film 86 has adhesive power, the anti-adhesive film 86 can be affixed easily to a joint between the dummy base material 80 and the real base material 90. Affixing only the anti-adhesive film 86 in advance allows the anti-adhesive film 86 to be attached precisely to the joint.

In another case, the connecting member 83 prepared in advance may be affixed to the dummy base material 80 and the real base material 90. Specifically, the connecting member 83 may be prepared in advance by adhesively attaching the anti-adhesive film 86 provided with the second adhesive layer 87 to the first adhesive layer 85 provided at the tape base material 84. Preparing the connecting member 83 in advance in this way allows the dummy base material 80 and the real base material 90 to be joined to each other efficiently.

Referring back to Fig. 7, after the connection between the dummy base material 80 and the real base material 90 is finished, transport of the joined base material 100 is started in the manufacturing apparatus 1 (step S5). Specifically, the base material unwinding roller 121, the film take-up roller 131, the suction roller 20, the film unwinding roller 521, and the assembly take-up roller 531 are rotated to transport the joined base material 100 in the longitudinal direction with the dummy base material 80 in the front.

After transport of the joined base material 100 is started, the dummy base material 80 first passes through the gap between the peeling roller 11 and the suction roller 20, and then the real base material 90 passes through this gap. Thus, the first layer 81 is first peeled from the second layer 82 at the dummy base material 80, and then the support film 91 is peeled from the electrolyte membrane 92 at the real base material 90 (step S6). After the support film 91 is peeled, the electrolyte membrane 92 is held on the suction roller 20 while the external surface thereof is exposed. Then, the electrolyte membrane 92 is transported toward the coating unit 30 by the rotation of the suction roller 20.

When the front end of the electrolyte membrane 92 in the transport direction goes into the coating unit 30, the coating unit 30 starts ejection of catalyst ink (step S7). In this preferred embodiment, the catalyst ink is applied to the surface of the electrolyte membrane 92 at regular intervals in the transport direction. The electrolyte membrane 92 having passed through the coating unit 30 is transported further downstream by the suction roller 20 and goes into the drying furnace 40. The applied catalyst ink is dried at the drying furnace 40. By doing so, a layer of the catalyst material 9b is formed on the surface of the electrolyte membrane 92. Next, the cover film 93 is affixed to the surface of the electrolyte membrane 92 at the affixing unit 50. The catalyst-coated membrane 94 with the affixed cover film 93 is wound on the assembly take-up roller 531.

As described above, in the manufacturing apparatus 1, by connecting the dummy base material 80 to the front end portion of the real base material 90 in the transport direction, the dummy base material 80 is transported ahead of the real base material 90. This allows application of the catalyst ink to be started at the front end portion of the electrolyte membrane 92 in the transport direction. Furthermore, application of the catalyst ink to the electrolyte membrane 92 can be started after a speed of transporting the base material is stabilized and after a condition in each processing unit such as the temperature of hot air at the drying furnace 40 is stabilized. As a result, it is possible to reduce a part of the electrolyte membrane 92 to be disposed of for being unable to be coated successfully in the vicinity of the head of the electrolyte membrane 92.

As the base material continues to be transported further, the real base material 90 is unwound entirely from the base material unwinding roller 121 in due time. When the real base material 90 becomes absent on the base material unwinding roller 121, the controller 70 stops each roller to stop transport of the base material and stops ejection of the catalyst ink from the coating unit 30 (step S8). Then, the real base material 90 is cut at the connecting part 14. The real base material 90 may be cut automatically by a mechanism to operate in response to a command from the controller 70 or manually by the user of the manufacturing apparatus 1.

Next, the controller 70 or the user judges the presence or absence of a subsequent real base material 90 to be coated (step S9). In the presence of the subsequent real base material 90 to be coated, the new real base material 90 in a roll shape is loaded on the base material unwinding roller 121 (step S10). Then, the new real base material 90 is unwound from the base material unwinding roller 121, and a front end portion of the unwound real base material 90 in the transport direction and a rear end portion of the cut real base material 90 in the transport direction are connected to each other at the connecting part 14 (step S11). These real base materials 90 may be connected to each other by the connecting member 83. Specifically, the respective support films 91 of the real base materials 90 may be connected to each other by the connecting member 83, and the respective electrolyte membranes 92 thereof may also be connected to each other by the connecting member 83.

When the connection between the real base materials 90 is finished, transport of the real base material 90 is restarted and ejection of the catalyst ink from the coating unit 30 is also restarted (step S12). By doing so, the catalyst ink is applied to a left portion of the previous real base material 90 (the rear end portion and its vicinity thereof in the transport direction) and subsequently, the catalyst ink is applied further to the new real base material 90. Next, the flow returns to step S8 and the processes in steps S8 to S12 are repeated as long as there is a new real base material 90 to be coated.

If there is no subsequent real base material 90 to be coated in step S9, the dummy base material 80 is loaded on the base material unwinding roller 121 (step S13). Then, the dummy base material 80 is unwound from the base material unwinding roller 121, and a front end portion of the dummy base material 80 in the transport direction and a rear end portion of the cut real base material 90 in the transport direction are connected to each other at the connecting part 14 (step S14).

In step S14, the dummy base material 80 and the real base material 90 are connected to each other on a layer-by-layer basis. Specifically, as shown in Fig. 6, the first layer 81 of the dummy base material 80 and the support film 91 of the real base material 90 are connected to each other by the connecting member 83, and the second layer 82 of the dummy base material 80 and the electrolyte membrane 92 of the real base material 90 are connected to each other by the other connecting member 83. These base materials are connected to each other by affixing the connecting members 83 in a pair in such a manner the connecting members 83 span both of these base materials like in Fig. 6, for example. This results in the formation of the elongated strip-shaped joined base material 100 with the first layer 81 and the support film 91 continuous with each other in the longitudinal direction and with the second layer 82 and the electrolyte membrane 92 continuous with each other in the longitudinal direction.

The dummy base material 80 and the real base material 90 may be connected to each other automatically by a mechanism to operate in response to a command from the controller 70 or manually by the user of the manufacturing apparatus 1.

When the connection between the dummy base material 80 and the real base material 90 is finished, the manufacturing apparatus 1 restarts transport of the joined base material 100 and also restarts ejection of the catalyst ink from the coating unit 30 (step S15). The joined base material 100 is transported in the longitudinal direction with the dummy base material 80 at the back. The coating unit 30 applies the catalyst ink to a left portion of the real base material 90 (the rear end portion and its vicinity thereof in the transport direction). When the front end of the dummy base material 80 in the transport direction goes into the coating unit 30 thereafter, the coating unit 30 stops ejection of the catalyst ink (step S16). The manufacturing apparatus 1 continues transport of the base material until every electrolyte membrane 92 is wound on the assembly take-up roller 531 and then stops transport of the base material.

The dummy base material 80 is thereafter cut at the connecting part 14. Then, the first layer 81 of the dummy base material 80 stretched over the transport path in the manufacturing apparatus 1 is collected on the film take-up roller 131, and the second layer 82 of the dummy base material 80 stretched over the transport path in the manufacturing apparatus 1 is collected on the assembly take-up roller 531 (step S17).

As described above, in the manufacturing apparatus 1 of this preferred embodiment, the dummy base material 80 is connected to the rear end portion of the real base material 90 in the transport direction. Then, the dummy base material 80 is transported behind the real base material 90. This allows the catalyst ink to be applied as far as to the rear end portion of the electrolyte membrane 92 in the transport direction. Furthermore, it is possible to reduce a speed of transporting the base material after application of the catalyst ink to the electrolyte membrane 92 is finished. As a result, it is possible to reduce a part of the electrolyte membrane 92 to be disposed of for being unable to be coated successfully in the vicinity of the rear end portion of the electrolyte membrane 92.

### <3. Modifications>

While the preferred embodiment has been described above, the present invention is not limited to the above-described embodiment but can be changed in various ways.

### <Modifications of Connecting Member>

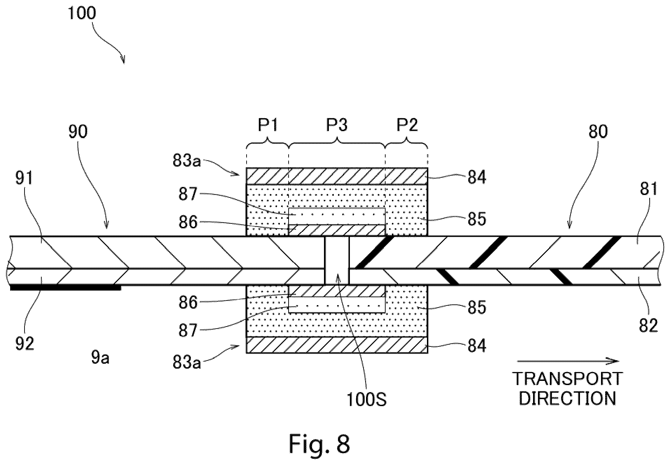

As an example, the configuration of the connecting member is not limited to the configuration of the connecting member 83 shown in Fig. 5. Fig. 8 is a sectional view showing a connecting member 83a according to a first modification. At the connecting member 83a, the anti-adhesive film 86 is in contact with an end portion of the real base material 90 and an end portion of the dummy base material 80. Furthermore, the second adhesive layer 87 is formed on a surface of the anti-adhesive film 86 on the side of the tape base material 84, and the second adhesive layer 87 adheres to the first adhesive layer 85.

At the connecting member 83a, adhesive power is zero in the third part P3. This allows power of adhesion between the connecting members 83a to be reduced further. Thus, it is possible to peel the support film 91 favorably from the electrolyte membrane 92 at the introducing and peeling unit 10.

For connecting the dummy base material 80 and the real base material 90 to each other via the connecting member 83a, the anti-adhesive film 86 provided with the second adhesive layer 87 and the tape base material 84 provided with the first adhesive layer 85 are first prepared individually. Next, the first adhesive layer 85 provided at the tape base material 84 and the second adhesive layer 87 provided at the anti-adhesive film 86 are affixed to each other, thereby forming the connecting member 83a. Then, the connecting member 83a is affixed to the dummy base material 80 and the real base material 90.

In another case, the anti-adhesive film 86 provided with the second adhesive layer 87 may be arranged on the dummy base material 80 and the real base material 90, and then the tape base material 84 provided with the first adhesive layer 85 may be affixed to the dummy base material 80, to the anti-adhesive film 86 with the second adhesive layer 87, and to the real base material 90.

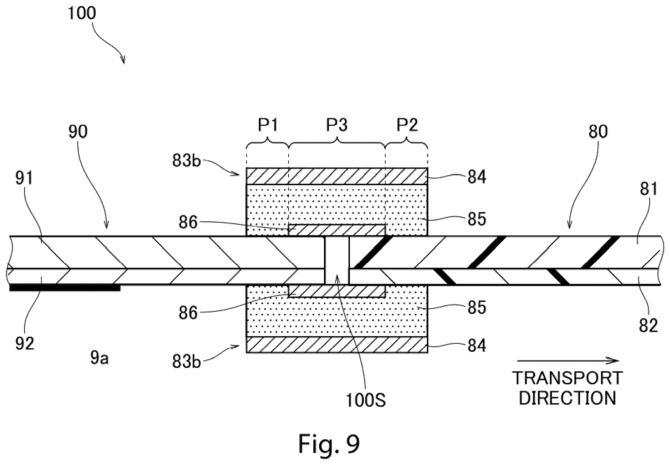

Fig. 9 is a sectional view showing a connecting member 83b according to a second modification. The connecting member 83b has a configuration determined by omitting the second adhesive layer 87 from the connecting member 83a shown in Fig. 8. Specifically, at the connecting member 83b, one surface of the anti-adhesive film 86 is in contact with the dummy base material 80 and the real base material 90, and the other surface of the anti-adhesive film 86 (a surface on the side of the tape base material 84) is affixed to the first adhesive layer 85. Using the connecting member 83b achieves effect comparable to the effect achieved by using the connecting member 83a.

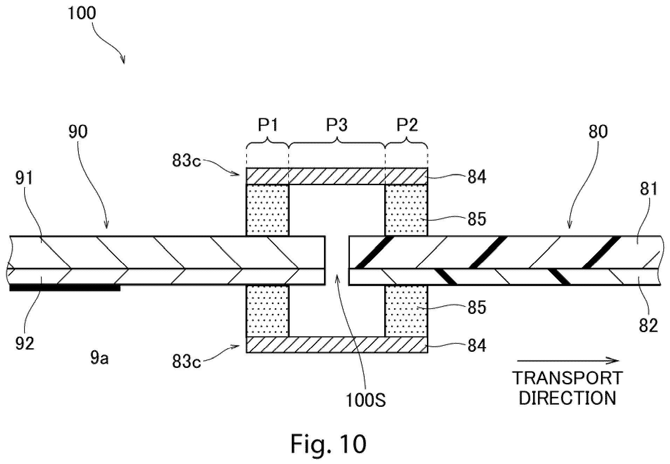

Fig. 10 is a sectional view showing a connecting member 83c according to a third modification. At the connecting member 83c, the first adhesive layer 85 is formed in the first part P1 and the second part P2 and is absent in the third part P3. The connecting member 83c achieves effect comparable to the effect achieved by the connecting member 83a or 83b.

Like the connecting member 83, the connecting members 83a to 83c are further usable for connecting the real base materials 90 to each other. Furthermore, connecting members having different configurations may be applied to one side and the other side of the joined base material 100. At the joined base material 100, the connecting member 83 may be used for connection between the support film 91 of the real base material 90 and the first layer 81 of the dummy base material 80, and the connecting member 83a may be used for connection between the electrolyte membrane 92 of the real base material 90 and the second layer 82 of the dummy base material 80, for example.

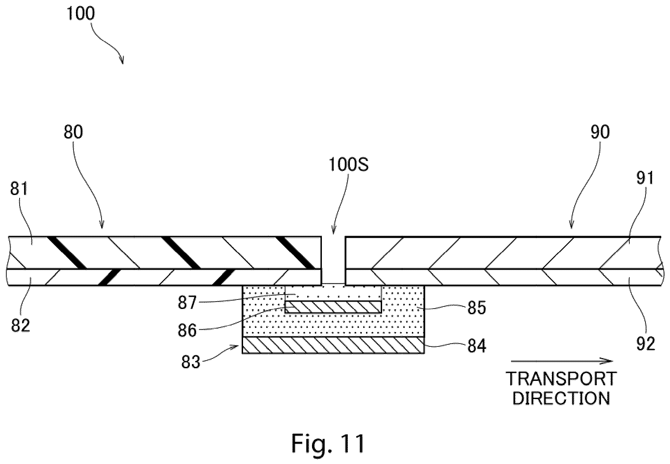

It is not essential to attach the connecting members 83 adhesively to both sides of the joined base material 100. Fig. 11 shows a joined base material 100 according to a modification. The joined base material 100 in Fig. 11 is in a state formed by connecting the dummy base material 80 to the rear end of the real base material 90 in step S14 shown in Fig. 7. Like in this joined base material 100, while the connecting member 83 is affixed to the electrolyte membrane 92 of the real base material 90 and the second layer 82 of the dummy base material 80, the connecting member 83 may not have to be affixed on the side of the support film 91 of the real base material 90 (on the side of the first layer 81 of the dummy base material 80). In the case where the connecting member 83 is adhesively attached only to the single side, adhesion of the first adhesive layer 85 having strong adhesive power to the support film 91 and the electrolyte membrane 92 is also avoided. Thus, it is possible to peel the support film 91 favorably from the electrolyte membrane 92.

### <Other Modifications>

As an example, in the above-described preferred embodiment, the real base material 90 includes two layers of the support film 91 and the electrolyte membrane 92, and the dummy base material 80 also includes two layers of the first layer 81 and the second layer 82. However, the number of layers in the real base material 90 may be equal to or greater than three. In this case, the number of layers in the dummy base material 80 may be set equal to that in the real base material 90. Then, the real base material 90 and the dummy base material 80 may be connected to each other on a layer-by-layer basis. If the layers forming the real base material 90 are to be transported along different paths, each of the layers forming the dummy base material 80 may be configured to be transported along the same path as a path for a corresponding layer in the real base material 90.

In the above-described preferred embodiment, the dummy base material 80 and the real base material 90 are loaded separately on the base material unwinding roller 121 in the manufacturing apparatus 1 and are connected to each other at the connecting part 14. However, the joined base material 100 may be formed in advance by connecting the dummy base material 80 and the real base material 90 to each other in a different place. As an example, the dummy base material 80 and the real base material 90 may be connected to each other in an apparatus to form a layer of the catalyst material 9a on one of surfaces of the electrolyte membrane 92, and the resultant joined base material 100 may be loaded as it is on the base material unwinding roller 121 of the manufacturing apparatus 1 to form a layer of the catalyst material 9b on the other surface of the electrolyte membrane 92.

As shown in Fig. 5, the joined base material 100 of the above-described preferred embodiment has the gap 100S between the dummy base material 80 and the real base material 90. However, the gap 100S is omissible.

In the above-described preferred embodiment, while the layer of the catalyst material 9a is formed in advance on one of the surfaces of the electrolyte membrane 92, the catalyst material 9b is formed on the other surface thereof. However, the manufacturing apparatus may be configured to form a catalyst material on the electrolyte membrane while a layer of a catalyst material is absent on each of the front and back surfaces of the electrolyte membrane.

The configurations of detailed portions of the manufacturing apparatus may be different from those illustrated in the drawings of the present application. Furthermore, all the elements appearing in the above-described preferred embodiment and modifications may be combined together, as appropriate, without inconsistencies.

While the invention has been shown and described in detail, the foregoing description is in all aspects illustrative and not restrictive. It is therefore understood that numerous modifications and variations can be devised without departing from the scope of the invention.

## Claims

1. A joined base material (100) comprising:
an elongated strip-shaped first base material (90) including a support film (91) and an electrolyte membrane (92) laminated on each other;
an elongated strip-shaped second base material (80) including a first layer (81) and a second layer (82) laminated on each other; and
a connecting member (83, 83a, 83b, 83c) connecting said first base material (90) and said second base material (80) to each other, wherein
said connecting member (83) includes a first part (P1) adhering to said first base material (90), a second part (P2) adhering to said second base material (80), and a third part (P3) located between said first part (P1) and said second part (P2) and overlaid on an end portion of said first base material (90) and an end portion of said second base material (80), and
adhesive power in said third part (P3) is smaller than adhesive power in said first part (P1) and adhesive power in said second part (P2).

2. The joined base material (100) according to claim 1, wherein
said connecting member (83) includes:
a strip-shaped tape base material (84);
a first adhesive layer (85) formed on one surface of said tape base material (84); and
an anti-adhesive film (86) located between said tape base material (84) and said first base material (90), and
said anti-adhesive film (86) is located in said third part (P3).

3. The joined base material (100) according to claim 2, wherein
said connecting member (83, 83a) includes a second adhesive layer (87) formed on one surface of said anti-adhesive film (86),
said second adhesive layer (87) adheres to the end portion of said first base material (90) and the end portion of said second base material (80), and
said second adhesive layer (87) has adhesive power smaller than adhesive power of said first adhesive layer (85).

4. The joined base material (100) according to claim 3, wherein
said second adhesive layer (87) adheres to a surface of said electrolyte membrane (92) of said first base material (90), and
said second adhesive layer (87) is thinner than said electrolyte membrane (92).

5. The joined base material (100) according to claim 3, wherein
said second adhesive layer (87) adheres to a surface of said support film (91) of said first base material (90), and
said second adhesive layer (87) is thinner than said support film (91).

6. The joined base material (100) according to claim 2, wherein
said connecting member (83, 83a) includes a second adhesive layer (87) formed on one surface of said anti-adhesive film (86), and
said second adhesive layer (87) adheres to said first adhesive layer (85).

7. The joined base material (100) according to claim 2, wherein
said first adhesive layer (85) is formed in said first part (P1) and said second part (P2) and is absent in said third part (P3).

8. The joined base material (100) according to any one of claims 1 to 7, wherein
said connecting member (83) includes:
a first connecting member (83, 83a, 83b, 83c) adhering to a surface of said first base material (90) on one side; and
a second connecting member (83, 83a, 83b, 83c) adhering to a surface of said first base material (90) on the other side.

9. The joined base material (100) according to any one of claims 1 to 8, wherein
said connecting member (83, 83a, 83b, 83c) connects said first base material (90) and said second base material (80) to each other while the end portion of said first base material (90) is separated from the end portion of said second base material (80).

10. A peeling method comprising:
a step a) of transporting the joined base material (100) according to any one of claims 1 to 9 in a longitudinal direction of the joined base material; and
a step b) of peeling said first layer (81) from said second layer (82) in said second base material (80) and thereafter peeling said support film (91) from said electrolyte membrane (92) in said first base material (90) at said joined base material (100) transported by said step a).

11. A coating method comprising:
the step a) and the step b) of the peeling method according to claim 10; and
a step c) of applying a catalyst material to a surface of said electrolyte membrane (92) from which said support film (91) has been peeled.

12. A peeling device comprising:
a transport mechanism (20, 121, 131, 521, 531) that transports the joined base material (100) according to any one of claims 1 to 9 in a longitudinal direction of the joined base material; and
a peeling unit (10) that peels said first layer (81) from said second layer (82) in said second base material (80) and peels said support film (91) from said electrolyte membrane (92) in said first base material (90).

13. A coating device comprising:
a transport mechanism (20, 121, 131, 521, 531) that transports the joined base material (100) according to any one of claims 1 to 9 in a longitudinal direction of the joined base material;
a peeling unit (10) that peels said first layer (81) from said second layer (82) in said second base material (80) and peels said support film (91) from said electrolyte membrane (92) in said first base material (90); and
a coating unit (30) that applies a catalyst material to a surface of said electrolyte membrane (92) from which said support film (91) has been peeled.

14. A base material connecting method comprising:
a step of connecting an end portion of an elongated strip-shaped first base material (90) and an end portion of an elongated strip-shaped second base material (80) to each other using a connecting member (83), the first base material including a support film (91) and an electrolyte membrane (92) laminated on each other, the second base material including a first layer (81) and a second layer (82) laminated on each other, wherein
said connecting member (83) includes a first part (P1) adhering to said first base material (90), a second part (P2) adhering to said second base material (80), and a third part (P3) located between said first part (P1) and said second part (P2) and overlaid on the end portion of said first base material (90) and the end portion of said second base material (80), and
adhesive power in said third part (P3) is smaller than adhesive power in said first part (P1) and adhesive power in said second part (P2).
